Europäisches Patentamt

(19) European Patent Office     (11) Numéro de publication:     **0 001 730**

Office européen des brevets                                **A1**

# (12) DEMANDE DE BREVET EUROPEEN

(21) Numéro de dépôt: 78400122.4          (51) Int. Cl.²: **F 03 B 13/12**
                                                 **F 03 G 7/04, F 03 G 7/08**
(22) Date de dépôt: 02.10.78

(30) Priorité: 14.10.77 FR 7730924
22.09.78 FR 7827269

(43) Date de publication de la demande:
02.05.79 Bulletin 79/9

(84) Etats contractants désignés:
BE CH DE GB LU NL SE

(71) Demandeur: Ferone, Gabriel
16 Place de la Nation
F-75012 Paris(FR)

(84) Etats contractants désignés:
BE CH DE GB LU NL SE

(71) Demandeur: Ferone, Ferdinand
12, rue de l'Archevêché
F-94220 Charenton le Pont(FR)

(84) Etats contractants désignés:
BE CH DE GB LU NL SE

(72) Inventeur: Ferone, Gabriel
16 Place de la Nation
F-75012 Paris(FR)

(72) Inventeur: Ferone, Ferdinand
12, rue de l'Archevêché
F-94220 Charenton le Pont(FR)

(74) Mandataire: Thibon-Littaye, Annick
11 rue de l'Etang
F-78160 Marly le Roi(FR)

(54) **Installation d'exploitation de l'énergie des océans.**

(57) Une installation pour l'exploitation de l'énergie des océans comprend au moins un flotteur (1) partiellement immergé à la surface de la mer, au moins un élément (3) de grande surface immergé horizontalement dans la mer, dont la surface et la profondeur d'immersion sont telles qu'il est pratiquement insensible aux vagues, et des moyens mécaniques (4, 5) de liaison entre ledit flotteur et ledit élément et de transmission (6) des déplacements du flotteur sous l'action des vagues à l'organe mobile (11) d'une machine hydraulique à capacité variable dont l'organe fixe (9) est solidaire de l'élément immergé.

FIG. 1

Installation d'exploitation de l'énergie des océans

La présente invention concerne la production d'énergie, à des fins domestiques et industrielles, à partir de celle qui est libérée dans les océans sous forme des vagues et de la houle. Elle vise essentiellement à permettre l'exploitation de cette énergie grâce à une installation que l'on peut construire et faire fonctionner sans les difficultés techniques insurmontables qu'impliquaient les installations antérieurement proposées. Une telle installation comporte, d'une part au moins un flotteur partiellement immergé à la surface de la mer, de telle manière que sous l'action des vagues il se déplace en permanence, principalement dans des mouvements verticaux alternativement montants et descendants, et d'autre part un élément pratiquement insensible aux vagues. Cet élément constitue un élément de référence pour l'ensemble de l'installation, sensiblement immobile. Il est avantageusement réalisé sous la forme d'une aile de grande surface immergée horizontalement dans la mer, mais éventuellement ou en complément il peut également être retenu par tout autre moyen, par exemple par des orins de fixation au fond de la mer qui peuvent présenter une certaine élasticité, l'essentiel étant que relativement au flotteur soumis à l'action des vagues, l'élément de référence se comporte comme un élément sensiblement immobile.

En association avec le flotteur et l'élément de référence il est prévu une machine hydraulique à capacité variable ainsi que des moyens mécaniques de liaison et de transmission de mouvements qui font varier cette capacité en fonc-

2

000173ö

tion des déplacements du flotteur. Un circuit hydraulique permet de transformer l'énergie ainsi recueillie en électricité dans une centrale installée sur place, immergée ou partiellement immergée.

Ainsi, l'installation selon l'invention comporte au moins un dispositif hydraulique à capacité variable, comprenant un organe fixe, généralement un corps de pompe, lié à l'élément de référence, et un organe mobile, généralement un piston coulissant dans le corps de pompe, lié au flotteur. Il est cependant avantageux que l'installation comporte, suivant la capacité de production qui lui est assignée, une pluralité de dispositifs hydrauliques analogues dont les capacités sont branchées en parallèle sur un même circuit de fluide hydraulique, par l'intermédiaire de valves ou clapets organisant la circulation du fluide hydraulique d'une manière en elle-même classique.

Il est avantageux que le système hydraulique comporte au moins trois appareils à deux organes coulissant l'un par rapport à l'autre, corps et piston, et que ces appareils soient disposés les uns par rapport aux autres selon une symétrie de révolution d'ordre correspondant, c'est-à-dire au moins d'ordre ternaire. Dans une forme de réalisation préférée, trois dispositifs de ce type sont liés à l'une de leurs extrémités à l'élément de référence, respectivement aux trois sommets d'un triangle. De préférence, l'un des organes des pompes, que l'on peut désigner comme l'organe fixe, ou le corps, est fixé à l'élément de référence sur rotule ou par un autre moyen de couplage articulé analogue. A leurs autres extrémités les trois appareils sont reliés par leur organe dit mobile, ou piston, soit directement soit indirectement au flotteur. La liaison est de préférence également assurée par des rotules ou autre système de couplage à articulation et en des points relativement rapprochés les uns des autres. Une disposition particulièrement avantageuse est celle de trois appareils hydrauliques orientés selon les arêtes d'un trièdre trirectangle dont le sommet se situe sous le flotteur ou lui est relié par un levier de transmission plus ou moins long.

D'autres variantes de réalisation apparaîtront ci-après, en même temps qu'une description plus complète des variantes déjà mentionnées, dans la description d'exemples particuliers de réalisation de l'installation selon l'invention,
nullement limitatifs. On se réfèrera aux figures 1 à 10 des
dessins annexés, dans lesquels :

La figure 1 représente le schéma de principe d'une
installation élémentaire ;

la figure 2 illustre le montage des installations
élémentaires dans une installation complète ;

la figure 3 représente la liaison entre un flotteur
et l'élément immergé correspondant ;

la figure 4 représente une pompe de l'installation,
en section horizontale ;

la figure 5 représente la même pompe en section verticale ;

les figures 6, 7, 8 et 9, illustrent schématiquement respectivement quatre modes de réalisation différents de
l'installation selon l'invention, comportant toujours au moins
un groupe de trois pompes à pistons, disposées selon une symétrie de révolution d'ordre ternaire autour d'un axe joignant
le flotteur à l'élément de référence ; et

la figure 10 représente un schéma de principe d'un
circuit hydraulique associé.

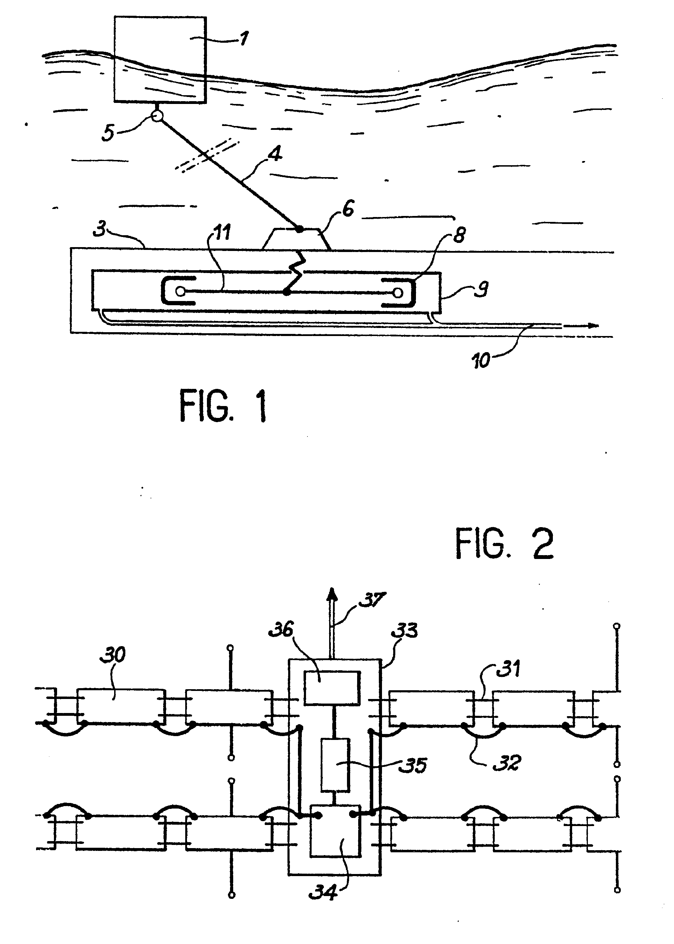

Sur la figure 1, on a représenté schématiquement un
flotteur 1, partiellement immergé, flottant à la surface de la
mer, de manière à être entraîné par les mouvements des vagues
et de la houle. Ce flotteur est relié à un élément totalement
immergé, constitué par une aile 3, de grande surface, flottant
horizontalement entre deux eaux. La liaison est assurée par
un bras 4, articulé à une extrémité sur le flotteur 1 par une
rotule 5, et terminé à l'autre extrémité par un système de
transmission mécanique 6, avec démultiplication, qui commande
une pompe alternative. De cette pompe, à double effet, on a
schématiquement représenté les pistons 8 et le cylindre 9,
lequel communique par des soupapes classiques avec un circuit
10 qui conduit un fluide hydraulique, ici constitué par de
l'huile. Le système de transmission 6 transforme les déplacements du flotteur transmis par le bras 4 en un mouvement
de translation alternative qui est communiqué à la tige 11 solidaire des deux pistons de la pompe.

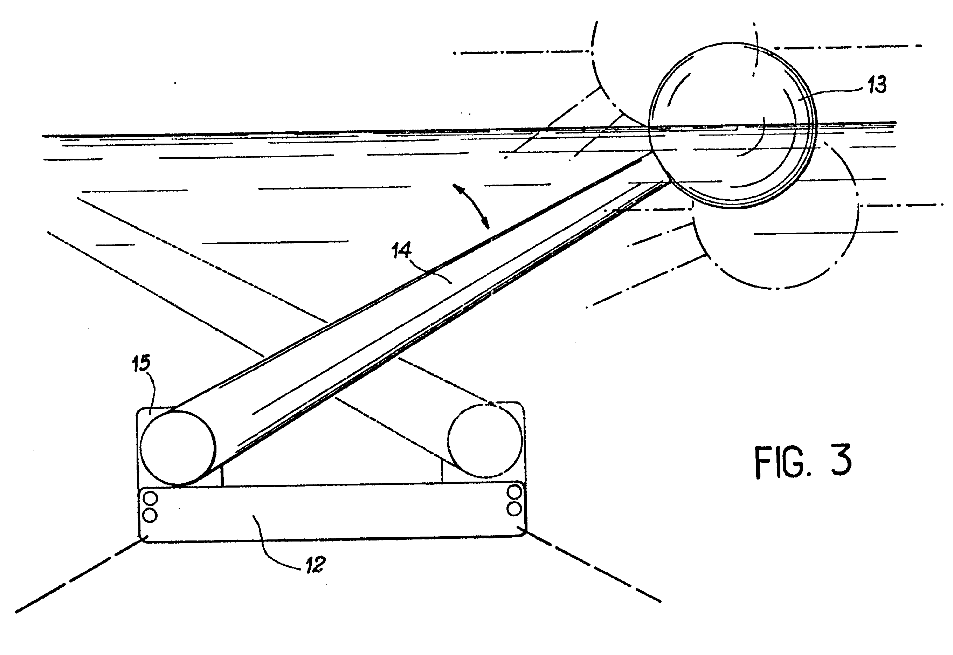

Une aile 12 analogue à celle qui est mentionnée ci-dessus peut être munie de plusieurs flotteurs 13, chacun relié par un bras 14 à une pompe 15, comme le montre la figure 3. Les différentes pompes sont solidaires de l'aile et situées sur celle-ci en des points suffisamment écartés pour que les déplacements des bras des flotteurs n'interfèrent pas entre eux. Dans le plan horizontal, l'aile 12 présente des dimensions, aussi bien en largeur qu'en longueur, relativement importantes par rapport aux ondulations de la houle, par exemple 50 m par 10 m. Elle est immergée à une profondeur qui se trouve à une distance généralement comprise entre 5 et 20 mètres du niveau des flotteurs. Chaque flotteur occupe un volume se rapprochant d'une sphère, par exemple un cube tronqué à chaque coin. Pour un volume de 10 m$^3$ par exemple, il peut présenter une densité telle qu'il soit à demi immergé.

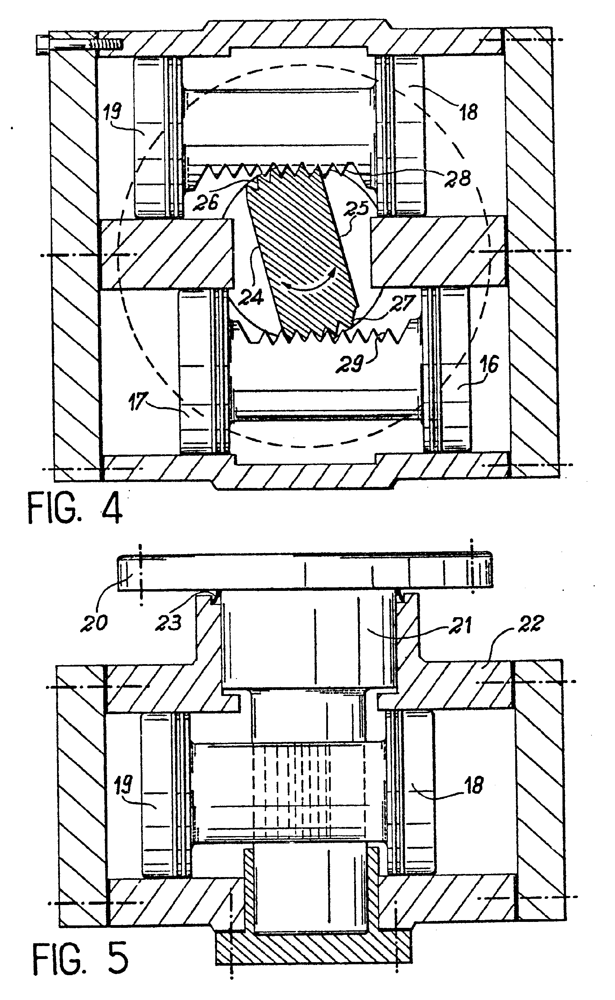

Conformément à l'exemple de réalisation des figures 4 et 5, chaque pompe est une pompe à quatre pistons 16, 17, 18, 19. Un plateau 20 terminant le bras du flotteur est solidaire d'un arbre 21, monté rotatif dans le corps de pompe 22, l'étanchéité étant assurée par un joint 23. Au milieu du corps de pompe, l'arbre 21 porte extérieurement, entre deux méplats 24 et 25, des dentures 26 et 27 qui engrènent avec des crémaillères dont sont pourvues les tiges des couples de pistons 18-19 et 16-17 respectivement.

La figure 2 montre comment peut être constituée une installation de puissance importante en assemblant des installations élémentaires comme celles qui viennent d'être décrites en parallèle sur le circuit du fluide hydraulique. Les ailes 30, comportant chacune par exemple cinq flotteurs, sont reliées les unes aux autres par des jonctions mécaniques 31, articulées pour permettre les débattements verticaux, et, d'autre part, par des jonctions souples 32 du circuit hydraulique. Chaque aile est retenue pour ne pas dériver par des orins d'ancrage lâche au fond de la mer.

L'installation comprend en outre une centrale 33, sur une plateforme flottante, semi-immergée ou immergée, qui produit de l'énergie électrique à partir de l'énergie hydraulique recueillie par les différentes pompes. La centrale comprend une bâche 34 du circuit hydraulique, commune aux différents éléments assemblés, une turbine 35 et un alternateur 36. L'électricité produite est conduite à un réseau d'utilisateur ou de distribution par un câble 37.

L'installation selon l'invention est susceptible de recevoir de nombreuses variantes. Elle s'adapte aisément dans chaque cas particulier, suivant notamment la puissance désirée et les conditions de fonds marins, de type de houle, de courants, rencontrées au lieu d'installation. Les éléments peuvent être construits en série, remorqués individuellement et installés sur place. Elle convient particulièrement bien pour résoudre les problèmes posés par les marées et les houles de longueur et de creux variables, rencontrées dans les océans.

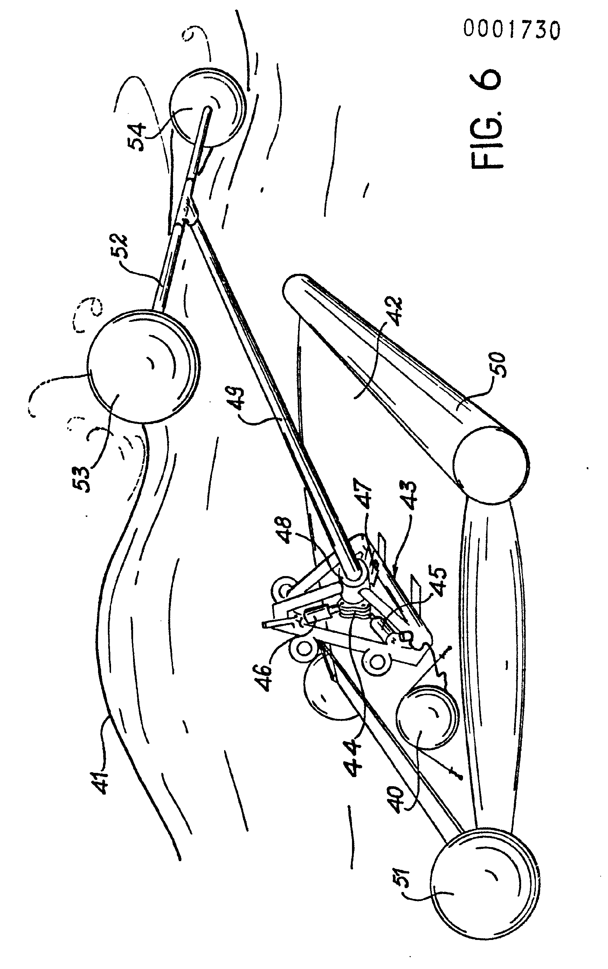

Les modes de réalisation décrits à titre d'exemples en référence aux figures 6 à 9 sont conçus de manière à s'adapter à des puissances de production d'énergie croissantes dans l'ordre des figures 6 à 9.

Sur la figure 6, on a représenté en 41 la surface de la mer et en 42 l'aile immergée, flottant entre deux eaux, qui constitue l'élément de référence et qui est réalisée d'une manière quelconque conforme à l'invention. L'aile flottante 42 est équilibrée à l'avant par un ballast cylindrique 50 et à l'arrière par deux ballasts sphériques 51. Pour améliorer le rendement, l'équilibre de l'aile peut être assuré en commandant les ballasts par un micro-processeur et des vannes avec servo-moteur.

L'aile flottante supporte un circuit hydraulique analogue à celui qui sera décrit plus loin et associé éventuellement à une centrale de transformation de l'énergie disponible sous forme hydraulique en énergie électrique. On a seulement représenté en 40 un réservoir servant d'accumulateur.

Sur l'aile 42 est montée une structure 43 qui comporte essentiellement trois poutres formant les côtés d'un triangle équilatéral et une pièce centrale 48. Trois pompes alternatives à pistons 45, 46, 47, ou vérins, relient respectivement chacun des sommets du triangle à l'une des extrémités d'un bras de levier 49. Dans chaque pompe, le corps de

pompe est relié à une extrémité à la structure 43, à l'un des sommets du triangle, par un système de couplage articulé à pivot ou à rotule, tandis qu'à l'autre extrémité le piston qui coulisse à l'intérieur du corps de pompe est relié à des flasques 44 formant la base du bras de levier, également par un système de couplage articulé.

Le bras de levier 49, de longueur relativement grande, prend appui par une rotule dans la pièce centrale 48 de la structure solidaire de l'aile flottante. A l'autre extrémité il est solidaire d'un bras perpendiculaire 52. Les extrémités opposées de ce bras sont liées, par des systèmes de couplage articulés, respectivement à chacun de deux éléments de flotteurs 53 et 54, identiques, qui flottent partiellement immergés à la surface de la mer.

L'ensemble mécanique de la figure 6 comporte donc un levier à deux degrés de liberté qui transmet les déplacements de l'ensemble flotteur aux pistons des pompes et actionne ainsi le circuit hydraulique.

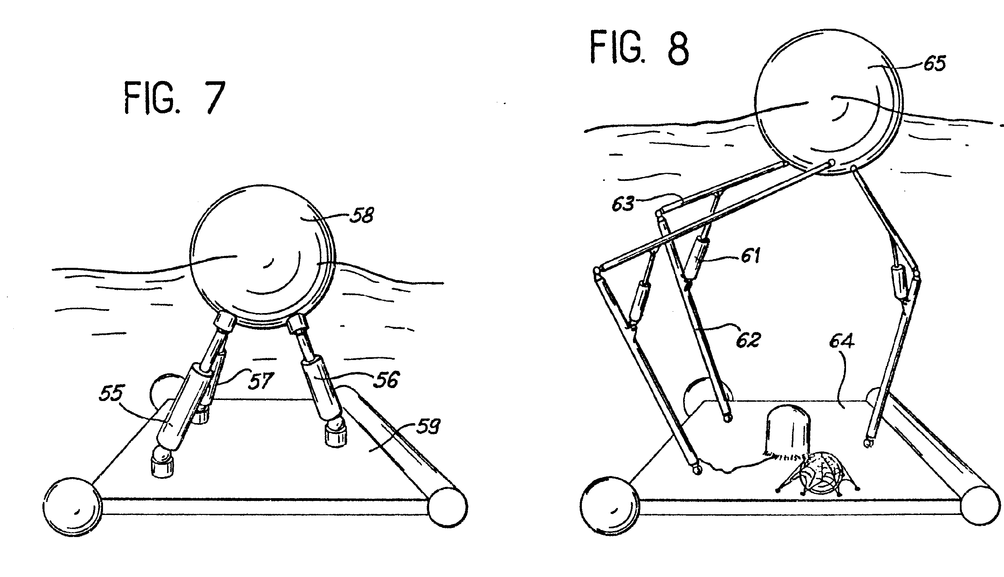

Un troisième degré de liberté est apporté dans le mode de réalisation de la figure 7. Dans ce cas, trois pompes, 55, 56, 57, analogues à celles de la figure 1, sont disposées selon les arêtes d'un trièdre trirectangle. Là où elles se rapprochent de l'axe de la symétrie de révolution, les pistons sont reliés par des systèmes individuels de couplage à rotule, directement à la base d'un flotteur 58, lequel est de forme sphérique dans le cas considéré. Aux extrémités opposées des trois pompes, les corps de pompes respectifs sont montés sur rotule sur l'aile flottante 59, analogue à celle de la figure 1, aux trois sommets d'un triangle équilatéral.

Suivant la direction des sollicitations de la mer, les pistons seront plus ou moins sollicités, chacun individuellement, et cet appareil sera toujours dans les conditions les plus favorables pour récupérer des forces de direction totalement aléatoires.

Dans la variante de réalisation de la figure 8, on retrouve une structure triangulaire à trois pompes, mais chaque pompe 61 est comprise dans un ensemble mécanique où elle est associée à deux bras successifs articulés, 62 et 63, an-

logues à ceux d'un pantographe, disposés comme illustré sur la figure et montés à rotule, d'une part sur l'aile flottante 64, d'autre part sur le flotteur 65, le corps et le piston de chaque pompe étant reliés respectivement à chacun des bras du pantographe correspondant.

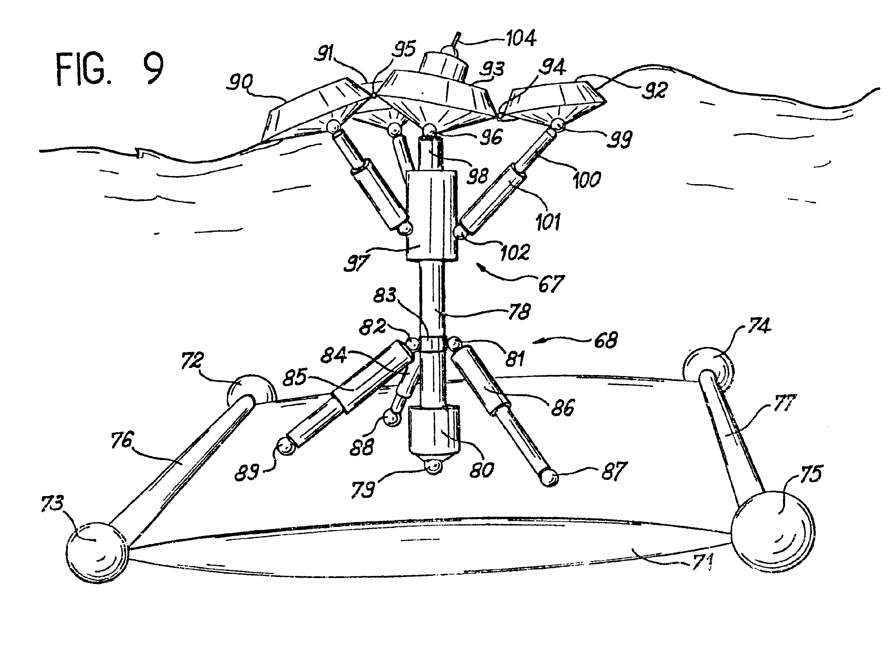

La figure 9 représente schématiquement encore une autre réalisation, plus élaborée que les précédentes et convenant à de plus fortes puissances. Dans ce cas, l'installation comporte deux groupes de trois pompes, chacun des groupes 67 et 68 satisfaisant à une disposition en trièdre à angles égaux comme sur la figure 2. Dans l'ensemble de l'installation, les deux groupes sont disposés tête-bêche, les sommets des trièdres étant plus rapprochés que les bases triangulaires.

L'aile flottante 71 stabilisée en quatre points par des ballasts, 72, 73, 74, 75, sphériques sur la figure, est maintenue à la profondeur désirée par les ballasts 76, 77, cylindriques sur la figure.

Un grand piston central 78 prend appui au centre de l'aile sur une rotule 79 par l'intermédiaire du vérin 80. Par les rotules visibles 81 et 82 et une rotule non visible située à 120 degrés des précédentes sur un collier 83 solidaire du piston 78, ce dernier est lié à des vérins 84, 85, 86, liés par ailleurs à l'aile flottante 71 par des rotules 87, 88, 89.

Trois flotteurs 90, 91, 92, sont montés autour d'un flotteur central 93 par les rotules visibles 94, 95, et une rotule à 120 degrés des précédentes, fixée sur la périphérie du flotteur central et non visible sur la figure.

Le flotteur central 93 est relié par une rotule 96 au grand piston central 78 par l'intermédiaire du vérin double 97 et du piston 98. Les flotteurs 90, 91, 92, sont respectivement reliés à ce vérin double 97, chacun par une rotule 99, un piston 100, un vérin 101 et une rotule 102, avec toujours des angles de 120 degrés, respectant la symétrie de révolution ternaire.

Le flotteur central porte un groupe générateur d'énergie et un système de télécommunication en 104.

Les mouvements de la mer provoquent les déplacements de l'ensemble et respectivement de chacun des flotteurs par rapport à son environnement et les forces sont transformées en énergie hydraulique par le même principe qui est décrit figure 7.

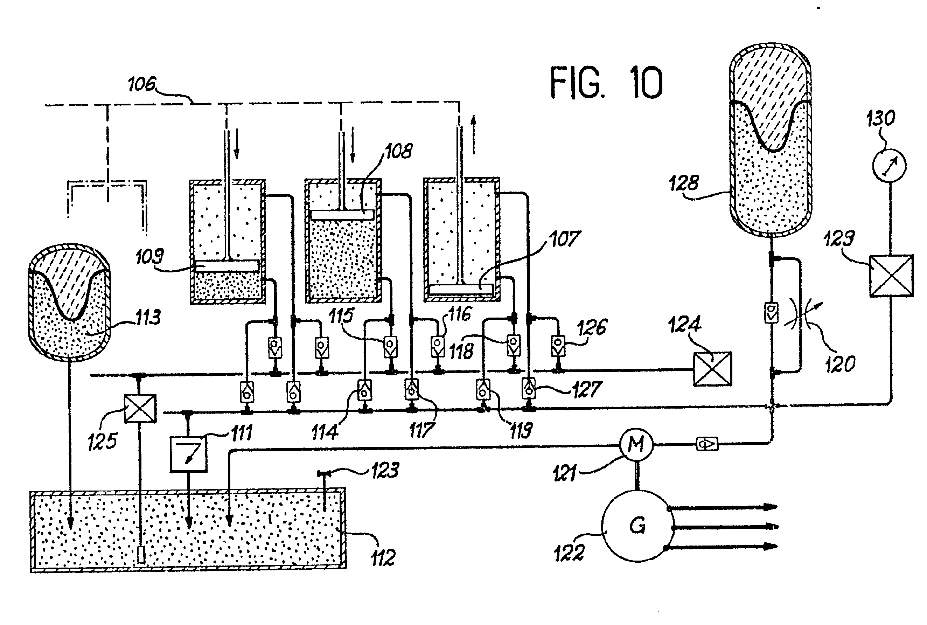

Suivant le schéma de fonctionnement hydraulique de la figure 10, les forces de la mer sont transmises de l'ensemble flotteur par un système de transmission tel que le bras de levier 106 qui correspond à celui qui est référencé 49 sur la figure 1, aux différents pistons des pompes ou vérins en parallèle. Trois pistons 107, 108, 109, sont représentés sur la figure. Le piston 107 est tiré et par conséquent va comprimer l'huile hydraulique contenue dans le corps supérieur du vérin contenant le piston 107. Lorsque cette huile est comprimée, le clapet 126 se ferme et l'huile s'écoule par le clapet 127 qui s'ouvre et va emplir le réservoir 128 et comprimer l'air situé à sa partie supérieure. En 129, on a représenté une vanne de sécurité et en 130 un indicateur de pression. Une vanne de sécurité 111 permet le retour direct à la bâche 112 où se trouve la réserve d'huile à basse pression stabilisée sous la mer par un réservoir 113 qui reçoit la pression de la mer à sa partie supérieure, ce qui compense dans les circuits les pressions dues à la profondeur.

En même temps que le piston 107 effectue ce mouvement, le piston 108 est supposé s'abaisser, comprimant l'huile hydraulique dans sa partie inférieure qui va au réservoir 128 par l'intermédiaire du clapet 114, le clapet 115 étant fermé. A la partie supérieure il se produit une aspiration et par l'intermédiaire du clapet 116 l'huile vient de la bâche 112 à travers le clapet anti retour 125. A la partie inférieure du vérin du piston 107, le même phénomène se produit, le clapet 118 est ouvert, le clapet 119 fermé, et l'huile remonte de la bâche et emplit le corps inférieur du cylindre au fur et à mesure du déplacement du piston.

Quelle que soit la direction des mouvements, on voit que les pistons à double effet travaillent en parallèle dans un sens ou un autre.

Lorsque la pression est suffisante dans le réservoir

9

0001730

128, la valve de pression programmée 120 permet le passage de l'huile vers le moteur hydraulique 121 solidaire du générateur 122 qui peut produire de l'électricité, de l'air comprimé, de la vapeur, ou de tout autre appareil. L'huile utilisée retourne à la bâche 112, protégée par une vanne de surpression 123. La vanne 124 permet d'évacuer l'air lors du remplissage en huile. Elle peut être pilotée. Les filtres à huile ne sont pas figurés ; ils se placent entre la bâche et les vérins, ainsi que des clapets de sécurité évitant le déversement de l'huile à la mer en cas de rupture de circuit.

Les circuits hydrauliques peuvent être modifiés ou complétés de manière évidente pour s'adapter aux différentes formes de réalisation de l'installation.

Les différentes particularités qui sont apparues dans le courant de la description des exemples précédents peuvent encore être combinées de bien d'autres manières pour constituer des variantes de réalisation de l'installation qui rentrent toutes dans le cadre de la présente invention.

Installation d'exploitation de l'énergie des océans

REVENDICATIONS

1. Installation d'exploitation de l'énergie des océans, caractérisée en ce qu'elle comprend au moins un flotteur mobile (1) à la surface de la mer sous l'action des vagues, au moins un élément de référence (3) immergé en profondeur et pratiquement insensible aux vagues, et au moins un dispositif hydraulique à capacité variable, comprenant un organe fixe (9) lié à l'élément de référence et un organe mobile (11), coulissant par rapport à l'organe fixe, lié au flotteur.

2. Installation selon la revendication 1, caractérisée en ce que l'élément de référence est constitué par une aile de grande surface immergée horizontalement dans la mer.

3. Installation selon la revendication 1 ou 2, caractérisée en ce qu'elle comporte un ensemble de dispositifs hydrauliques à capacité variable, disposés selon une symétrie de révolution autour d'un axe joignant le flotteur à l'élément de référence et branchés en parallèle sur ledit circuit hydraulique, chacun comprenant un organe mobile lié au flotteur et un organe fixe lié à l'élément de référence.

0001730

FIG. 1

FIG. 2

FIG. 3

0001730

0001730

FIG. 4

FIG. 5

FIG. 6

0001730

FIG. 7

FIG. 8

0001730

FIG. 9

0001730

FIG. 10

0001730

BAD ORIGINAL

Office européen
des brevets

**RAPPORT DE RECHERCHE EUROPEENNE**

Numéro de la demande

EP 78 400 122.4

| | **DOCUMENTS CONSIDERES COMME PERTINENTS** | | CLASSEMENT DE LA DEMANDE (Int. Cl.²) |
|---|---|---|---|
| Catégorie | Citation du document avec indication, en cas de besoin, des parties pertinentes | Revendica-tion concernée | |
| X | <u>US - A - 4 076 463</u> (M. WELCZER)<br>* abrégé, colonne 3, lignes 34 à 44; fig. 3, position 117* | 1 | F 03 B 13/12<br>F 03 G 7/04<br>F 03 G 7/03 |
| X | <u>US - A - 4 013 382</u> (R.E. DIGGS)<br>* abrégé* | 1 | |
| X | <u>US - A - 3 970 415</u> (K. WIDECRANTZ et al)<br>* abrégé, fig. 4* | 1,2 | DOMAINES TECHNIQUES RECHERCHES (Int. Cl.²) |
| — | <u>DE - A - 2 523 809</u> (K. WAGENER)<br>* page 3, paragraphe 4* | 3 | F 03 B 13/12<br>F 03 G 7/04<br>F 03 G 7/08 |
| P | COMPRESSED AIR édition 82, no 11, 1977<br>J.F. RIDONE et al "Wave-Powered Air Conditioner"<br>page 756 | 1 | |
| P | <u>DE - A - 2 628 454</u> (K. WAGENER)<br>* page 4, paragraphe 3* | 3 | CATEGORIE DES DOCUMENTS CITES |
| A | <u>FR - A - 2 339 071</u>(CYRILLE MATHIEU)<br>* page 4, lignes 25 à 29, positions 33, 34, 35, 37; fig. 5* | | X: particulièrement pertinent<br>A: arrière-plan technologique<br>O: divulgation non-écrite<br>P: document intercalaire<br>T: théorie ou principe à la base de l'invention<br>E: demande faisant interférence<br>D: document cité dans la demande<br>L: document cité pour d'autres raisons |
| | | | &: membre de la même famille, document correspondant |

X  Le présent rapport de recherche a été établi pour toutes les revendications

| Lieu de la recherche | Date d'achèvement de la recherche | Examinateur |
|---|---|---|
| Berlin | 29-01-1979 | STÖCKLE |

OEB Form 1503.1  06.78